# EUROPÄISCHE PATENTSCHRIFT

(11) **EP 0 774 826 B1**
(45) Veröffentlichungstag und Bekanntmachung des Hinweises auf die Patenterteilung: **24.01.2001**
(21) Anmeldenummer: 96117601.3
(22) Anmeldetag: 04.11.1996
(51) Int. Cl.: H02K 41/03

(54) **Synchronmotor**
Synchronous motor
Moteur synchrone

(30) Priorität: 15.11.1995 DE 19542551
(43) Veröffentlichungstag der Anmeldung: 21.05.1997
(73) Patentinhaber: Oswald Elektromotoren GmbH, 63897 Miltenberg (DE)
(72) Erfinder: Oswald, Bernhard, 63897 Miltenberg (DE)
(74) Vertreter: Knoblauch, Ulrich, Dr.-Ing.

(56) Entgegenhaltungen:
- EP-A- 0 569 594
- WO-A-96/41411
- DE-A- 4 113 353
- GB-A- 945 225
- US-A- 4 965 864
- PATENT ABSTRACTS OF JAPAN vol. 011, no. 020 (E-472), 20.Januar 1987 & JP 61 191259 A (HITACHI METALS LTD), 25.August 1986,
- PATENT ABSTRACTS OF JAPAN vol. 014, no. 528 (E-1004), 20.November 1990 & JP 02 223342 A (ADVANCE KOOJIENEREESHIYON SYST GIJUTSU KENKYU KUMIAI), 5.September 1990,
- PATENT ABSTRACTS OF JAPAN vol. 014, no. 085 (E-0890), 16.Februar 1990 & JP 01 295638 A (MATSUSHITA ELECTRIC WORKS LTD), 29.November 1989,

## Beschreibung

Die Erfindung bezieht sich auf einen Synchronmotor mit einem Primärteil, der mehrere Wicklungen aufweist, die mit Mehrphasenstrom betreibbar sind, und mit einem Sekundärteil, der koaxial zum Primärteil angeordnet ist und mehrere Feldmagnete aufweist, wobei der eine der beiden Teile relativ zum anderen aufgrund der zusammenwirkenden magnetischen Kräfte der Wicklungen und Feldmagnete bewegbar ist, wobei die Wicklungen axial hintereinander und koaxial angeordnet sind, so daß sie bei Betrieb mit dem Mehrphasenstrom ein axiales Wanderfeld erzeugen, wobei die Feldmagnete aus Ringsegmenten bestehen deren radial innere und äußere Seiten magnetisch entgegengesetzt polarisiert sind und die axial hintereinander mit abwechselnder Polarität und koaxial zu den Wicklungen im Bereich des Wanderfeldes angeordnet sind, und wobei die Feldmagnete mit ihrer einen Umfangsfläche an einem Joch aus magnetisierbarem Material anliegen.

Bei dem aus der US-A-4 965 864 bekannten Synchronmotor dieser Art bildet der Primärteil gleichzeitig das Gehäuse einer Pumpe und der Sekundärteil einen Kolben. Der Körper des Kolbens ist mit Ringnuten versehen, in denen die als Dauermagnete ausgebildeten Ringsegmente der Feldmagnete angeordnet sind. Die Ringnuten schwächen den Querschnitt des Körpers des Sekundärteils. Er ist daher nicht hoch belastbar.

Aus der EP-A-0 569 594 ist ein Synchronmotor mit rotierendem Läufer bekannt. Der Läufer hat axial zwischen dauermagnetischen Feldmagneten durchgehende, auf ihren axialen Seiten schwalbenschwanzförmig hinterschnittene Rippen, zwischen denen die Feldmagneten mit entsprechend geformten Seiten gehalten werden. Die Rippen dienen mithin vornehmlich der Lagesicherung der Feldmagnete, jedoch nicht der Erhöhung der Belastbarkeit des Läufers, da er rotiert und - im Gegensatz zu einem vergleichsweise langen Linearmotor der eingangs genannten Art - kaum radial belastet wird.

Der Erfindung liegt die Aufgabe zugrunde, einen Synchronmotor der eingangs genannten Art anzugeben, der höher belastbar ist.

Erfindungsgemäß ist diese Aufgabe dadurch gelöst, daß das Joch axial durchgehend ist und axial durchgehende, radial außen freiliegende Rippen aufweist, die sich zwischen den einander zugekehrten axialen Endflächen der Ringsegmente durch alle Feldmagnete erstrecken.

Aus dem nicht vorveröffentlichten, gemäß Artikel 54(3) EPÜ zu berücksichtigenden Dokument WO 96/41411 gilt ein dem Gegenstand des Patentanspruchs 1 ähnlicher Synchronmotor als bekannt, bei dem das Joch jedoch durch radiale Stege (36) mit einem äußeren Zylinder verbunden ist.

Die Rippen können aus Stahl oder einem anderen Material bestehen und steigern die mechanische Stabilität der Linearlagerung und können auch zur Wegmessung dienen.

Grundsätzlich kann zwar der Primär- oder der Sekundärteil relativ zu dem anderen Teil verschiebbar sein, doch ist vorzugsweise der Sekundärteil axial verschiebbar gelagert. Auf diese Weise entfallen Bürsten oder Schleppkabel, über die andernfalls die Stromversorgung der Wicklungen des Primärteils erfolgen müßte.

Die Rippen können mit wenigstens einer axialen Laufrille für Linearlager versehen sein. Hierbei kann es sich bei den Linearlagern um Kugelumlaufbüchsen oder Drehmoment-Kugelbüchsen handeln. Diese Rippen können, zum Beispiel bei Verwendung von Gleitlagern, auch schraubenlinienförmig verlaufen, um eine Einseitigkeit der Lagerkräfte zu vermeiden.

Es ist aber auch möglich, daß die Ringsegmente axial versetzt in einer Schraubenlinie angeordnet oder schraubenlinienförmig sind. Auf diese Weise läßt sich eine Kraftwelligkeit weitgehend unterdrücken.

Vorzugsweise handelt es sich bei den Feldmagneten um Dauermagnete. Diese ergeben eine hohe Leistungsdichte. Wenn sie im bewegten Motorteil angeordnet sind, werden sie synchron mit dem Wanderfeld bewegt, so daß in ihnen praktisch keine Wirbelströme induziert und mithin Wärmeverluste weitgehend vermieden werden.

Die Dauermagnete können z.B. Ferrit oder seltene Erden aufweisen. Diese haben eine hohe Permeabilität, Remanenz und Koerzitivfeldstärke und eine dementsprechend hohe Energiedichte.

Alternativ kann es sich bei den Feldmagneten auch um Supraleitungsmagnete handeln.

Auch im Primärteil können die Wicklungen aus Supraleitern bestehen.

Mit Supraleitern lassen sich grundsätzlich wesentlich höhere Magnetfelder als mit Dauermagneten erreichen. Dies führt zu außerordentlich hohen Leistungsdichten.

Als Supraleiter können vorzugsweise Hochtemperatur-Supraleiter verwendet werden, um den Aufwand an Kryotechnik (Tieftemperaturtechnik) zu vermindern.

Sodann sollten Primär- und Sekundärteil zylindrisch ausgebildet sein. In dieser Form lassen sie sich auf einfache Weise herstellen und bearbeiten und ermöglichen sie die Einhaltung kleiner Luftspalte, die für die Höhe der Induktion wichtig sind. Sodann können bei der zylindrischen Bauform störende Querkräfte und Drehmomente weitgehend ausgeschlossen werden. Grundsätzlich lassen sich aber auch flache Linearmotoren nach dem Synchronprinzip aus einem entsprechend flachen Primär- und Sekundärteil herstellen.

Die Erfindung und ihre Weiterbildungen werden nachstehend anhand schematischer Zeichnungen bevorzugter Ausführungsbeispiele näher beschrieben. Es zeigen:
- Fig. 1: eine perspektivische Darstellung wesentlicher Bauteile eines erfindungsgemäßen Synchronmotors,
- Fig. 2: einen Querschnitt durch den Sekundärteil des Synchronmotors nach Fig. 1,
- Fig. 3: eine perspektivische Darstellung eines abgewandelten Sekundärteils des Synchronmotors nach Fig. 1,
- Fig. 4: einen Querschnitt durch den in Fig. 3 dargestellten Sekundärteil und
- Fig. 5: eine weitere Abwandlung eines Sekundärteils eines erfindungsgemäßen Synchronmotors in perspektivischer Darstellung.

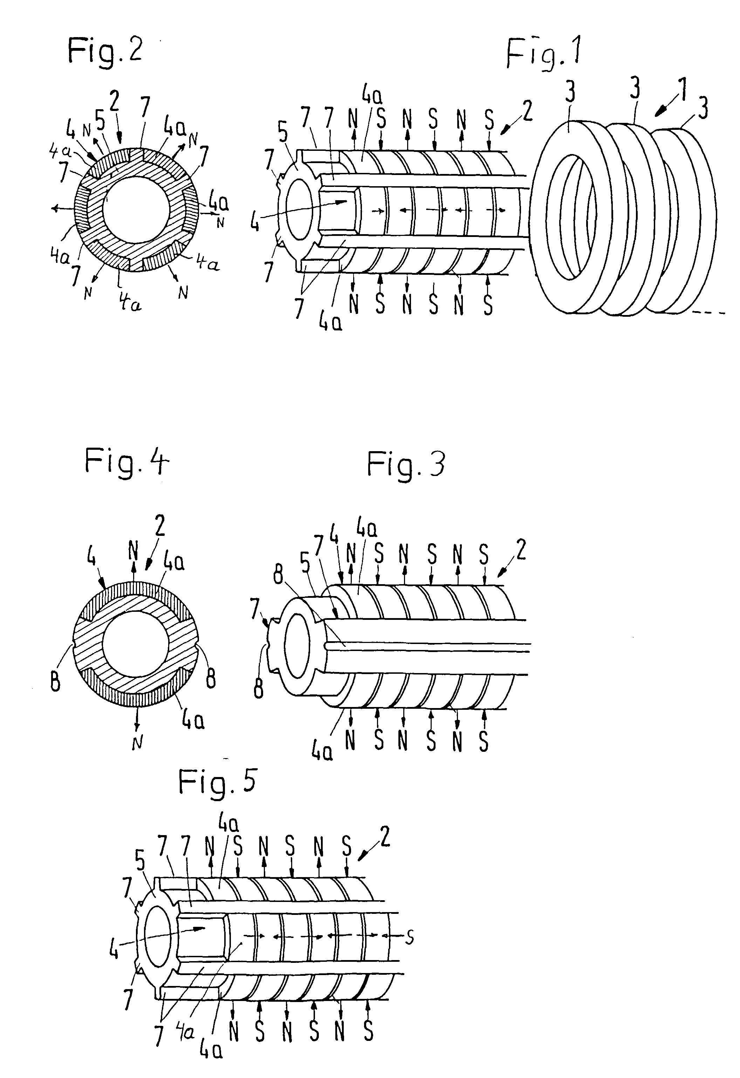

Der Synchronmotor nach den Fig. 1 und 2 besteht aus einem zylindrischen Primärteil 1 und einem zylindrischen Sekundärteil 2, wobei der Primärteil 1 den Ständer und der Sekundärteil 2 den Läufer bildet. Der Primärteil enthält mehrere zylindrische Wicklungen 3, die mit Mehrphasenstrom betreibbar sind und axial hintereinander und koaxial angeordnet sind, so daß sie bei Betrieb mit dem Mehrphasenstrom ein axiales Wanderfeld erzeugen. Zusätzlich können die Wicklungen 3 in einem (nicht dargestellten) zylindrischen Joch aus magnetisierbarem Material an diesem anliegend angeordnet sein, und zwischen ihnen können Ringbleche aus magnetisierbarem Material angeordnet sein (die ebenfalls nicht dargestellt sind).

Der Sekundärteil 2 ist koaxial innerhalb des Primärteils und axial relativ zu diesem verschiebbar angeordnet. Er weist mehrere Feldmagnete 4 auf, die aus ringförmig angeordneten Ringsegmenten 4a bestehen, deren radial innere und äußere Seiten magnetisch entgegengesetzt polarisiert sind, angedeutet durch Feldlinienpfeile N (Nordpol) und S (Südpol). Sie sind axial hintereinander mit abwechselnder Polarität in den jeweiligen Polabständen des Primärteils 1 und koaxial zu den Wicklungen 3 im Bereich des Wanderfeldes der Wicklungen 3 angeordnet. Mit ihrer inneren Umfangsfläche liegen die Feldmagnete 4 an einem zylindrischen Joch 5 aus magnetisierbarem Material an.

Bei den Feldmagneten 4 handelt es sich um Dauermagnete aus Ferrit oder seltenen Erden, zum Beispiel Samarium-Kobalt oder Neodym-Eisen-Bor. Anstelle von Dauermagneten können aber auch Supraleitungsmagnete als Feldmagnete 4 vorgesehen sein. Diese können mit tiefen Temperaturen, beispielsweise 4,2 K, betrieben werden. Vorzugsweise werden sie jedoch mit höheren Temperaturen bis beispielsweise 89 K (mit flüssigem Stickstoff gekühlt) oder darüber betrieben. Auf diese Weise ergeben sich außerordentlich hohe Leistungsdichten.

Supraleitende Magnete können sowohl in Form von Wicklungen als auch in Form von Massivkörpern verwendet werden. Bei Massivkörpern wird zunächst eine Magnetisierung durch äußere Felder vorgenommen. Dabei werden sie stets unter der kritischen Temperatur gehalten. Die Magnetisierung kann entweder außerhalb oder innerhalb des Synchronmotors erfolgen. Dies geschieht in der Weise, daß ein Magnetfeld der gewünschten Geometrie durch die Supraleiter erzeugt wird, während diese sich noch im normalleitenden Zustand befinden (Temperatur oberhalb der kritischen Grenze). Danach werden sie abgekühlt. Unterschreitet die Temperatur den kritischen Wert, werden die Massivkörper supraleitend und halten das eingeschlossene Magnetfeld fest. Das äußere Magnetfeld kann dann abgeschaltet werden. Solange die Temperatur tief genug bleibt, bleiben auch die Magnete supraleitend.

Die Massivkörper können auch in der Weise auferregt werden, daß man - bereits unterhalb der kritischen Temperatur - das äußere Feld über die kritische Feldstärke hinaus steigert und dann allmählich abklingen läßt. Bei Unterschreitung der kritischen Feldstärke hält der Supraleiter das Feld konstant.

Die Wicklungen 3 des Primärteils 1 können jeweils als Magnetisierungsmagnete benutzt werden, wenn die Feldstärke in Form einer Sinushalbwelle (von genügender Dauer) verläuft.

Die Wicklungen 3 des Primärteils 1 können ebenfalls aus Supraleitungen ausgebildet sein. Wegen des hier erforderlichen Wanderfeldes werden vorzugsweise Wechselstrom-Supraleiter verwendet, die sehr kleine Filamente aufweisen. Bei dieser Ausbildung lassen sich auch im Primärteil höhere Magnetfeldstärken erzielen.

Grundsätzlich lassen sich Primär- und Sekundärteil austauschen. So kann der Sekundärteil 2 mit den Feldmagneten 4 (Dauer- oder Supraleitungsmagneten) außen angeordnet sein und der Primärteil 1 mit den Wanderfeldwicklungen innen.

Das Joch 5 hat axial durchgehende Rippen 7, die sich zwischen den einander zugekehrten Endflächen der Ringsegmente 4a durch alle Feldmagnete 4 erstrecken. Sie bestehen aus Stahl oder einem anderen Material und tragen zur mechanischen Stabilität des Sekundärteils 2 bei. Ferner können sie zur Wegmessung verwendet werden.

Bei der Abwandlung nach den Fig. 3 und 4 dienen die Rippen 7 zusätzlich zur Linearlagerung. Hierfür sind sie mit axialen Laufrillen 8 versehen, in denen die Kugeln von Kugelumlaufbüchsen oder Drehmoment-Kugelbüchsen geführt werden. Bei Verwendung von Drehmoment-Kugelbüchsen können eine oder mehrere Längsrillen vorgesehen sein. Beispielsweise bei Verwendung von Gleitlagern können diese Rippen 7 auch wendel- oder schraubenlinienförmig verlaufen, um eine Einseitigkeit der Kräfte zu vermeiden.

Bei der Abwandlung nach Fig. 5 sind die Ringsegmente 4a axial versetzt in einer Schraubenlinie angeordnet. Alternativ können sie selbst schraubenlinienförmig sein. Dadurch wird die Kraftwelligkeit vermindert, die beim Übergang des Wanderfelds von Feldmagnet 4 zu Feldmagnet 4 entsteht.

Auch bei den Ausführungsformen nach den Fig. 3 bis 5 können die Feldmagnete 4 bzw. ihre Ringsegmente 4a als Supraleiter ausgebildet sein.

Auch ihre Wicklungen 3 können Supraleiter aufweisen. Vorzugsweise handelt es sich dann ebenfalls um kleine Filamente, die für Wechselstrom geeignet sind.

Statt der dargestellten zylindrischen Ausbildung von Primärteil 1 und Sekundärteil 2 ist es auch möglich, sie flach auszubilden. Die zylindrische Form hat jedoch den Vorteil, daß die einzelnen Bauteile leichter herstellbar sind.

## Patentansprüche

1. Synchronmotor mit einem Primärteil (1), der mehrere Wicklungen (3) aufweist, die mit Mehrphasenstrom betreibbar sind, und mit einem Sekundärteil (2), der koaxial zum Primärteil (1) angeordnet ist und mehrere Feldmagnete (4) aufweist, wobei der eine der beiden Teile (1, 2) relativ zum anderen aufgrund der zusammenwirkenden magnetischen Kräfte der Wicklungen (3) und Feldmagnete (4) bewegbar ist, wobei die Wicklungen (3) axial hintereinander und koaxial angeordnet sind, so daß sie bei Betrieb mit dem Mehrphasenstrom ein axiales Wanderfeld erzeugen, wobei die Feldmagnete aus Ringsegmenten (4a) bestehen deren radial innere und äußere Seiten magnetisch entgegengesetzt polarisiert sind und die axial hintereinander mit abwechselnder Polarität und koaxial zu den Wicklungen (3) im Bereich des Wanderfeldes angeordnet sind, und wobei die Feldmagnete (4) mit ihrer einen Umfangsfläche an einem Joch (5) aus magnetisierbarem Material anliegen, wobei das Joch axial durchgehend ist und axial durchgehende, radial außen freiliegende Rippen (7) aufweist, die sich zwischen den einander zugekehrten axialen Endflächen der Ringsegmente (4a) durch alle Feldmagnete (4) erstrecken.

2. Synchronmotor nach Anspruch 1, **dadurch gekennzeichnet,** daß der Sekundärteil (2) axial verschiebbar gelagert ist.

3. Synchronmotor nach Anspruch 1 oder 2, **dadurch gekennzeichnet,** daß die Rippen (7) mit wenigstens einer axialen Laufrille (8) für Linearlager versehen sind.

4. Synchronmotor nach einem der Ansprüche 1 bis 3, **dadurch gekennzeichnet**, daß die Ringsegmente (4a) axial versetzt in einer Schraubenlinie angeordnet oder schraubenlinienförmig sind.

5. Synchronmotor nach einem der Ansprüche 1 bis 4, **dadurch gekennzeichnet**, daß die Feldmagnete (4) Dauermagnete sind.

6. Synchronmotor nach Anspruch 5, **dadurch gekennzeichnet,** daß die Dauermagnete (4) Ferrit oder seltene Erden aufweisen.

7. Synchronmotor nach einem der Ansprüche 1 bis 4, **dadurch gekennzeichnet,** daß die Feldmagnete (4) Supraleitungsmagnete sind.

8. Synchronmotor nach einem der Ansprüche 1 bis 7, **dadurch gekennzeichnet,** daß die Wicklungen (3) des Primärteils (1) aus Supraleitern bestehen.

9. Synchronmotor nach Anspruch 7 oder 8, **dadurch gekennzeichnet,** daß die Supraleiter HochtemperaturSupraleiter sind.

10. Synchronmotor nach einem der Ansprüche 1 bis 9, **dadurch gekennzeichnet,** daß Primär- und Sekundärteil (1, 2) zylindrisch oder flach ausgebildet sind.

## Claims

1. Synchronous motor with a primary portion (1) comprising several coils (3) which can be operated with polyphase current, and with a secondary portion (2) which is arranged coaxially with the primary portion (1) and comprises several field magnets (4), wherein one of the two portions (1, 2) is movable relative to the other on account of the coacting magnetic forces of the coils (3) and field magnets (4), wherein the coils (3) are arranged axially one behind the other and coaxially so that when operated with the polyphase current they generate an axially travelling field, wherein the field magnets consist of ring segments (4a) whose radially inner and outer sides are magnetically oppositely polarised and which are arranged axially one behind the other with alternating polarity and coaxially with the coils (3) in the region of the travelling field, and wherein the field magnets (4) with one circumferential surface abut against a yoke (5)of magnetisable material, wherein the yoke is axially continuous and comprises axially continuous ribs (7) which are free on the outside radially and which extend between the facing axial end faces of the ring segments (4a) through all the field magnets (4).

2. Synchronous motor according to claim 1, characterised in that the secondary portion (2) is mounted axially slidably.

3. Synchronous motor according to claim 1 or 2, characterised in that the ribs (7) are provided with at least one axial groove (8) for linear bearings.

4. Synchronous motor according to any of claims 1 to 3, characterised in that the ring segments (4a) are arranged axially offset in a helical line or are in the form of a helical line.

5. Synchronous motor according to any of claims 1 to 4, characterised in that the field magnets (4) are permanent magnets.

6. Synchronous motor according to claim 5, characterised in that the permanent magnets have ferrite or rare earths.

7. Synchronous motor according to any of claims 1 to 4, characterised in that the field magnets (4) are superconducting magnets.

8. Synchronous motor according to any of claims 1 to 7, characterised in that the coils (3) of the primary portion (1) are made of superconductors.

9. Synchronous motor according to claim 7 or 8, characterised in that the superconductors are high-temperature superconductors.

10. Synchronous motor according to any of claims 1 to 9, characterised in that primary and secondary portions (1, 2) are of cylindrical or flat construction.

## Revendications

1. Moteur synchrone comprenant une partie primaire (1) qui présente plusieurs enroulements (3) susceptible d'être alimentés avec un courant multiphasé, et comprenant une partie secondaire (2), agencée de façon coaxiale par rapport à la partie primaire (1) et comprenant plusieurs aimants (4), l'une des deux parties (1, 2) étant mobile par rapport à l'autre sous l'effet des forces magnétiques coopérantes des enroulements (3) et des aimants (4), lesdits enroulements (3) étant agencés axialement les uns derrière les autres et coaxialement de telle manière qu'ils produisent un champ axial progressif lors de l'alimentation avec le courant multiphasé, et lesdits aimants étant formés par des segments annulaires (4a) dont les côtés radialement intérieur et extérieur présentent des polarités magnétiques opposées, et sont agencés avec des polarités alternantes et coaxialement aux enroulements (3) dans la région du champ progressif, lesdits aimants (4) étant appliqués par l'une de leurs surfaces périphériques contre une culasse (5) en matériau capable d'être aimanté, et ladite culasse étant continue dans le sens axial et présentant des nervures (7) continues dans le sens axial et libres radialement à l'extérieur, lesdites nervures s'étendant entre les surfaces terminales axiales mutuellement en vis-à-vis des segments annulaires (4a) à travers tous les aimants (4).

2. Moteur synchrone selon la revendication 1, caractérisé en ce que la partie secondaire (2) est montée avec faculté de translation axiale.

3. Moteur synchrone selon l'une ou l'autre des revendications 1 et 2, caractérisé en ce que les nervures (7) sont pourvues d'au moins une rainure de déplacement axiale (8) pour un palier linéaire.

4. Moteur synchrone selon l'une des revendications 1 à 3, caractérisé en ce que les segments annulaires (4a) sont agencés avec un décalage axial suivant une ligne hélicoïdale, ou bien ont une forme en ligne hélicoïdale.

5. Moteur synchrone selon l'une des revendications 1 à 4, caractérisé en ce que les aimants (4) sont des aimants permanents.

6. Moteur synchrone selon la revendication 5, caractérisé en ce que les aimants permanents (4) comprennent de la ferrite ou des terres rares.

7. Moteur syndrome selon l'une des revendications 1 à 4, caractérisé en ce que les aimants (4) sont des aimants supraconducteurs.

8. Moteur synchrone selon l'une des revendications 1 à 7, caractérisé en ce que des enroulements (3) de la partie primaire (1) sont formés par des supraconducteurs.

9. Moteur synchrone selon l'une ou l'autre des revendications 7 et 8, caractérisé en ce que les supraconducteurs sont des supraconducteurs à haute température.

10. Moteur synchrone selon l'une des revendications 1 à 9, caractérisé en ce que la partie primaire et la partie secondaire (1,2) sont cylindriques ou réalisées sous forme plane.
